# EUROPÄISCHE PATENTANMELDUNG

(11) **EP 2 088 127 A1**
(43) Veröffentlichungstag der Anmeldung: **12.08.2009**
(21) Anmeldenummer: 09152442.1
(22) Anmeldetag: 10.02.2009
(51) Int. Cl.: C02F 1/44, B01D 61/22, B01D 65/10

(54) **Ultrafiltrationsverfahren für Rohwasser zur Trinkwassergewinnung mit integriertem Verfahren zur Bestimmung von Kapillardefekten**

(30) Priorität: 11.02.2008 AT 2162008
(71) Anmelder: Sansystems Bioline GesmbH, 4655 Vorchdorf (AT)
(72) Erfinder: Kremsmayr, Helga, 4655 Vorchdorf (AT); Huemer, Helmut, 4655 Vorchdorf (AT); Appl, Siegmund, 3421 Höflein/Donau (AT)
(74) Vertreter: Staudt, Armin Walter

(57) **Zusammenfassung**

Die vorliegende Erfindung betrifft ein Ultrafiltrationsverfahren für Rohwasser, wie beispielsweise Oberflächenwasser, Quell- oder Brunnenwasser, welches Mikroorganismen, Makromoleküle, Sporen oder andere kleine Feststoffteilchen enthalten kann, zur Gewinnung von unbedenklichem Trinkwasser, bei dem das Rohwasser zur Ultrafiltrationsmembrane geführt wird und unter Aufrechterhaltung einer Strömung durch die Membranporen mit im Wesentlichen glatter Oberfläche und einem Porendurchmesser von etwa 0,005 µm bis 0,04 µm fließt. Um das Vorhandensein einer mangelhaften Membranqualität oder einer undichten Einbaustelle oder das plötzliche Auftreten von Membranbruch diskontinuierlich oder permanent zu überwachen und sofort ermitteln zu können, werden dem Rohwasser Markerpartikel mit weitgehend glatter oder strukturierter Oberfläche zugesetzt, welche eine vorbestimmte Größe aufweisen, sodass sie nicht in der Lage sind eine einwandfreie Membrane zu durchdringen, und im Reinwasserstrom ein für dieses Markerpartikel geeigneter Detektor eingebaut ist.

## Beschreibung

Die vorliegende Erfindung betrifft ein Ultrafiltrationsverfahren für Rohwasser, wie beispielsweise Oberflächenwasser, Quell- oder Brunnenwasser, welches Mikroorganismen, Makromoleküle, Sporen oder andere kleine Feststoffteilchen enthalten kann, zur Gewinnung von unbedenklichem Trinkwasser, bei dem das Rohwasser der Ultrafiltrationsmembrane zugeführt wird und unter Aufrechterhaltung einer Strömung durch die Membranporen fließt, wobei dem Rohwasser ein Filtrationshilfsstoff beigegeben wird, der die Membranoberfläche kontinuierlich von anhaftenden Verunreinigungen befreit.

Insbesondere betrifft die Erfindung ein mit dem Ultrafiltrationsverfahren integriertes Verfahren zur Bestimmung von Kapillardefekten in der Membrane einer Ultrafiltrationsanlage.

### Stand der Technik

Die Ultrafiltration ist neben etlichen anderen Verfahren eine gängige Methode zur Herstellung von bakterien- und virenfreiem Trinkwasser aus Oberflächengewässern, sowie aus Quell- oder Brunnenwasser. Ihre Membranen verfügen über eine Porengrößen von etwa 0,01 µm bis 0,02 µm. Es sind jedoch auch Membranen mit einem freien Porendurchmesser von 0,005 µm, sowie solche mit einem freien Porendurchmesser von 0,04 µm, je nach Einsatzfall denkbar. Bakterien haben beispielsweise häufig eine längliche Form, beispielsweise Stäbchen mit einer Länge von 0,3 µm und eine Breite von 0,1 µm. Mit dem erfindungsgemäßen Verfahren soll aber auch Rohwasser aufbereitbar sein, welches Viren enthalten kann.

Zur wirksamen Abtrennung kleiner Teilchen, wie Mikroorganismen oder Makromoleküle aus einer Flüssigkeit durch Ultrafiltration, ist es erforderlich, dass durch geeignete Maßnahmen eine Verstopfung der Membranfläche verhindert wird. Hierzu sind etliche Verfahren bekannt, beispielsweise die Lösung entlang der Membrane so zu führen, dass sie entlang der Membranoberfläche in stetiger turbulenter Strömung gehalten wird, wie beispielsweise in der DE 11 54 439 beschrieben.

Die in diesen Verfahren beschriebenen Maßnahmen reichen jedoch nicht aus um bei einer kontinuierlichen Filtration ein Festsetzen der Mikroorganismen oder von Makromolekülen an der Membrane einer Ultrafiltrationsanlage ausreichend zu verhindern. Um hier Abhilfe zu schaffen, schlägt die DE 22 54 860 vor, der Flüssigkeit ein Filtrationshilfsmittel in Form von Holzschliffteilchen zuzusetzen, welche in der Lage sind, die Membranoberfläche kontinuierlich von Filtrationsrückständen zu befreien. Holzschliffteilchen sind jedoch aufgrund ihrer Geometrie in der Lage die Membranoberfläche anzugreifen und führen so zu einem vorzeitigen Verschleiß derselben.

Weiters sind aus dem Stand der Technik bereits etliche Verfahren zur Bestimmung von Undichtigkeiten an der Einbaustelle der Membranen oder von Kapillarbruch innerhalb der Membrane bekannt. So beschreibt die japanische Veröffentlichungsschrift JP 2006255527 A eine Methode zur Bestimmung von Membranbruch, bei welcher der Druck auf der Rohwasser- und der Reinwasserseite ebenso gemessen wird wie die Konzentration bestimmter Partikel auf beiden Seiten, sowie weitere Parameter. Plötzlich oder in einem kurzen Zeitintervall auftretende Änderungen in diesen Parametern zeigen einen Defekt in der Membrane an.

Eine andere Detektionsmethode wird in den Patenten US 6,838,001 B2 und US 6,838,002 B2 beschrieben. Hierbei werden inerte, fluoreszierende Agenzien dem Rohwasserstrom beigefügt um einzelne Parameter des Membranfilters permanent überwachen zu können. Die Konzentration des Agens auf der Reinwasserseite wird kontinuierlich gemessen und ausgewertet. Eine Änderung der Agenskonzentration deutet auf einen Membranbruch hin.

Wieder ein anderes Verfahren zur Feststellung von Membranbruch wird in der DE 601 02 295 T2 beschrieben. Aus dem zu behandelnden Versorgungsfluid wird eine darin gelöste Verbindung ausgewählt, die in einer signifikanten Menge vorhanden ist, jedoch normalerweise durch die Membran im Wesentlichen aufgehalten wird. Die Konzentration dieser gelösten Verbindung wird auf der Reinwasserseite gemessen und mit einem Referenzwert verglichen. Ist der gemessene Wert größer als der Referenzwert, zeigt dies einen Membranbruch an.

Andere bekannte Verfahren führen zur Überwachung der Funktionstüchtigkeit der Filter auf der Reinwasserseite permanente Leitfähigkeitsmessungen durch oder das Reinwasser wird wiederholt bakteriologischen Analyseverfahren unterzogen.

Diese bekannten Verfahren weisen jedoch eine Reihe von Nachteilen auf. So ist der Einsatz von inerten fluoreszierenden Zusatzstoffen nicht geeignet für Anlagen zur Herstellung von bakterien- und virenfreiem Trinkwasser, unter anderem auch deshalb, weil das fluoreszierende Detektionsmittel für die vorgesehene Kapillarporengröße viel zu groß ist.

Die Verwendung von gelösten Verbindungen, beispielsweise von Sulfationen, wie bei der DE 601 02 295 vorgeschlagen, ist wohl bei einer Nanofiltrationsanlage einsetzbar, für eine Ultrafiltrationsmethode, bei der die Poren der Kapillaren um Zehnerpotenzen größer sind, ist sie jedoch nicht geeignet. Auch ist die Beimengung von Zuschlagstoffen, welche zu einem Teil durch die Membrane gehen und deren Konzentration im Reinwasser gemessen wird, bei einer Trinkwasseraufbereitungsanlage nicht unproblematisch, da sie einen von Anfang an vorhandenen Membranfehler oder eine undichte Einbaustelle bzw. Verbindungsstelle an der Membrane nicht erfassen würde.

Das größte Problem bei diesen bekannten Verfahren liegt jedoch darin, dass sie gänzlich ungeeignet für eine permanente Überwachung der Membrane sind, da hier bei jeder Zudosierung zu Beginn eine erhöhte Konzentration im Reinwasserstrom auftritt, welche erst allmählich abnimmt und daher keine exakten Informationen über den Beginn eines Kapillarbruchs während des laufenden Betriebes liefern.

### Technische Aufgabenstellung

Die vorliegende Erfindung stellt sich daher die Aufgabe, einen Filterhilfsstoff bereit zu stellen, der in der Lage ist, die Membranoberfläche kontinuierlich von anhaftenden Mikroorganismen und Makromolekülen zu befreien, ohne dabei die Membranoberfläche spürbar anzugreifen. Gleichzeitig soll dieser Filterhilfsstoff in der Lage sein, mangelhafte Kapillarqualität oder das Auftreten eines Kapillarbruchs, sowie Undichtigkeiten an der Membrane im Reinwasserstrom sofort und gegebenenfalls auch permanent detektierbar zu machen, ohne im Normalbetrieb im Reinwasserstrom vorzukommen.

Um die gestellten Aufgaben zu lösen und gleichzeitig die Nachteile des zitierten Standes der Technik zuverlässig zu vermeiden, schlägt die vorliegende Erfindung ausgehend von einem Verfahren der eingangs genannten Gattung vor, dass der freie Porendurchmesser der Membranporen in einem Bereich von 0,005 µm bis 0,04 µm liegt, und dass dem Rohwasser Markerpartikel als Filtrationshilfsstoff und zur gleichzeitigen Überwachung der Membrane auf Porendefekte zugesetzt werden, deren Durchmesser größer ist als der Porendurchmesser der Membranporen und somit nicht in der Lage sind eine einwandfreie Membrane zu durchdringen, und dass im Reinwasserstrom ein Detektor für die Markerpartikel vorhanden ist, der bei einem Durchgang von Markerpartikeln ein Signal erzeugt.

Dem Rohwasser werden diskontinuierlich oder kontinuierlich oder in periodischen Zeitabständen, beispielsweise nach jedem Spül- bzw. Rückspülvorgang, Markerpartikel mit weitgehend glatter Oberfläche zugesetzt, welche eine Größe besitzen, die es unmöglich macht, eine intakte und dicht eingebaute Membrankapillare zu durchdringen. Bei einem Kapillarbruch oder einer mangelhaften Kapillarqualität oder einer undichten Einbaustelle an der Membrane kann diese von Markerpartikeln durchdrungen werden, die auf der Reinwasserseite mit bekannten Methoden leicht detektierbar ist.

Das Markerpartikel verbleibt im Normalfall bis zur nächsten Spülung im Rohwasserbereich der Membrane und wird - bei einer permanenten Überwachung - sofort nach dem nächsten Spülvorgang wieder zudosiert, womit eine permanente Membranüberwachung gewährleistet ist. Selbstverständlich kann dasselbe Markerpartikel auch eingesetzt werden um eine neue Membrane zu überprüfen oder auch um in diskontinuierlichen Überwachungen die Überprüfung der Funktionsfähigkeit einer Membrane zu testen.

### Ausführungsbeispiel

Eine Ultrafiltrationsanlage mit einer Kapillarporengröße von 0,01 bis 0,02 µm eignet sich zur Aufbereitung von bakterien- und virenfreiem Trinkwasser aus Oberflächengewässern, sowie aus Quell- oder Brunnenwasser sehr gut.

Es wurde nun in umfangreichen Versuchen festgestellt, dass für solche Anlagen beispielsweise Kalziumcarbonat (CaCO₃) der Sorte "Socal Food Grade" der Solvay Österreich GmbH mit einer Granulatgröße von 0,15 µm den in der Aufgabenlösung gestellten Anforderungen sehr gut entspricht.

Dieses Markerpartikel wird beispielsweise in einer Menge von 2 Gramm auf 7 Liter Rohwasser eingesetzt, verweilt bis zur nächsten Spülung bzw. Rückspülung im Rohwasserbereich der Membrane, unabhängig von der Menge des aufzubereitenden bzw. durchfließenden Wassers, womit eine ständige Präsenz des Granulats zur permanenten Überwachung der Filtermembrane im laufenden Betrieb im Einsatz ist und verändert in dieser geringen Menge den pH-Wert des Rohwassers praktisch nicht. Auch stellt vorhandene Huminsäure im Rohwasser bei dieser Konzentration an CaCO₃ kein Problem dar.

Ein weiterer Vorteil ist, dass durch die geringe Größe von 0,15 µm das CaCO₃

kein Wasser mehr aufnehmen kann, womit eine Verklumpung ausgeschlossen ist. Damit kann sich das CaCO₃ über einen längeren Zeitraum unmittelbar im Raum neben dem Filter befinden ohne negativen Einfluss auf die Durchflussmenge des Filters nehmen zu können.

Ist jedoch der pH-Wert des Rohwassers zu niedrig, kann es zu einer störenden Löslichkeit des CaCO₃ kommen. Auch kann es gegebenenfalls erforderlich sein, Markerpartikel mit wesentlich kleinerem Durchmesser einzusetzen. Ein Beispiel für solche Markerpartikel ist TiO₂, welches sich in der Rutil-Modifikation in Versuchen sehr geeignet für das erfindungsgemäße Verfahren erwiesen hat. Diese Markerpartikel beispielsweise der Sorte UV-Titan L530 oder UV-Titan P580 weisen einen Durchmesser von etwa 0,03 µm auf.
Es versteht sich von selbst, dass das erfindungsgemäße Verfahren auch mit anderen lebensmittelechten, praktisch nicht wasserlöslichen, in ihren Eigenschaften vergleichbaren Materialien durchgeführt werden kann. Auch können die Materialien, so wie das UV-Titan P580 oberflächenbehandelt sein, aber auch beschichtete bzw. hydrophobe Materialien sind denkbar.

Durch die ständige Bewegung des Markerpartikels wird auch ein Reinigungseffekt erzielt, indem es auf der Rohwasserseite entlang der Membrane bis zum nächsten Rückspülvorgang wiederholt an der Membranoberfläche entlang geführt wird, wobei es die an der Membranoberfläche aufgrund des statischen Druckes lagernden Verunreinigungen, wie Mikroorganismen oder Makromoleküle durch dynamischen Impuls von dieser abträgt und damit einer Verringerung der Membrankapazität durch zunehmende Verstopfung erfolgreich entgegenwirkt.

Damit wird ermöglicht, dass bei kontinuierlicher Filtration über eine lange Zeitspanne eine Belegung der Membranfilterfläche erschwert bzw. verhindert wird, zugleich wird eine möglichst hohe Filterdurchsatzrate bei möglichst geringem Energieaufwand über einen sehr langen Zeitraum aufrecht erhalten. Ein weiterer Vorteil ist darin zu sehen, dass die Markerpartikel aufgrund ihrer besonderen Beschaffenheit zu keinem spürbaren Verschleiß der Membrane beitragen, womit insgesamt die Lebensdauer der Membrane in sehr vorteilhafter Weise verlängert wird.

Das Markerpartikel befindet sich im kontinuierlichen Betrieb quasi permanent im Rohwasserraum. Sobald es mitsamt der Schmutzfracht beim Rückspülen in den Schmutzwasserkanal entsorgt wird, erfolgt eine erneute Zufuhr über die mit dem Rohwasserzustrom verbundene Dosierpumpe. Auf der Reinwasserseite wird gleichzeitig permanent das Vorliegen der Markerpartikel überwacht.

Sobald nun ein Kapillarbruch auftritt können die Markerpartikel ebenso wie Mikroorganismen die Membrane durchdringen und werden sofort vom Detektor erfasst, welcher über eine geeignete Steuerung sofort den Betrieb der Ultrafiltrationsanlage beendet und ein geeignetes Stör- oder Warnsignal, beispielsweise bildgebender oder akustischer Art abgibt.

Auf diese Weise ist eine permanente Überwachung der einwandfreien Betriebsweise der Ultrafiltrationsanlage gewährleistet. Zugleich ist es aber auch gewährleistet, dass die Anlage nur angefahren werden kann, wenn die erwartete Kapillarqualität auch tatsächlich gegeben ist und wenn keine undichten Einbaustellen der Membrane vorhanden sind.

## Patentansprüche

1. Ultrafiltrationsverfahren für Rohwasser, wie beispielsweise Oberflächenwasser, Quell- oder Brunnenwasser, welches Mikroorganismen, Makromoleküle, Sporen oder andere kleine Feststoffteilchen enthalten kann, zur Gewinnung von unbedenklichem Trinkwasser, bei dem das Rohwasser der Ultrafiltrationsmembrane zugeführt wird und unter Aufrechterhaltung einer Strömung durch die Membranporen fließt, wobei dem Rohwasser ein Filtrationshilfsstoff beigegeben wird, der die Membranoberfläche kontinuierlich von anhaftenden Verunreinigungen befreit, **dadurch gekennzeichnet, dass** der freie Porendurchmesser der Membranporen in einem Bereich von 0,005 µm bis 0,04 µm liegt, und dass dem Rohwasser Markerpartikel als Filtrationshilfsstoff und zur gleichzeitigen Überwachung der Membrane auf Porendefekte zugesetzt werden, deren Durchmesser größer ist als der Porendurchmesser der Membranporen und somit nicht in der Lage sind eine einwandfreie Membrane zu durchdringen, und dass im Reinwasserstrom ein Detektor für die Markerpartikel vorhanden ist, der bei einem Durchgang von Markerpartikeln ein Signal erzeugt.

2. Ultrafiltrationsverfahren nach Anspruch 1, **dadurch gekennzeichnet, dass** die Markerpartikel zur diskontinuierlichen Überwachung einer einwandfreien Funktionsweise der Membrane zugesetzt werden.

3. Ultrafiltrationsverfahren nach Anspruch 1, **dadurch gekennzeichnet, dass** die Markerpartikel zur permanenten Überwachung der einwandfreien Funktionsweise der Membrane zugesetzt werden.

4. Ultrafiltrationsverfahren nach Anspruch 1 oder 3, **dadurch gekennzeichnet, dass** das Markerpartikel dem Rohwasser in vorgegebenen Zeitintervallen, etwa nach jedem Spülvorgang oder Rückspülvorgang mittels einer Dosierpumpe zugegeben wird und bis zum nächsten Spülvorgang oder Rückspülvorgang bei störungsfreiem Betrieb im Rohwasserbereich der Membrane verbleibt.

5. Ultrafiltrationsverfahren nach Anspruch 1, 2, 3 oder 4, **dadurch gekennzeichnet, dass** die von der Membrane zurückgehaltenen Markerpartikel bei der Rückspülung gemeinsam mit allen zurückgehaltenen Inhaltsstoffen, wie Bakterien, Viren, Sporen oder makromolekularen Teilchen über den Schmutzwasseranschluss der Anlage entsorgt werden.

6. Ultrafiltrationsverfahren nach einem der Ansprüche 1 bis 5, **dadurch gekennzeichnet, dass** die Markerpartikel eine im wesentlichen glatte oder strukturierte Oberfläche aufweisen, nicht fluoreszierend, lebensmittelecht und praktisch nicht wasserlöslich sind.

7. Ultrafiltrationsverfahren nach einem der Ansprüche 1 bis 6, **dadurch gekennzeichnet, dass** die Markerpartikel oberflächenbehandelt und/oder hydrophob sind.

8. Ultrafiltrationsverfahren nach einem der Ansprüche 1 bis 7, **dadurch gekennzeichnet, dass** das Markerpartikel Titandioxid in der Rutil-Modifikation, bevorzugt mit einer Teilchengröße von im Wesentlichen 0,03 µm ist.

9. Ultrafiltrationsverfahren nach einem der Ansprüche 1 bis 7, **dadurch gekennzeichnet, dass** das Markerpartikel Kalziumkarbonat, bevorzugt mit einer Teilchengröße von maximal 0,15 µm ist.

10. Ultrafiltrationsverfahren nach einem der Ansprüche 1 bis 9, **dadurch gekennzeichnet, dass** die Markerpartikel einen im Wesentlichen einheitlichen Durchmesser aufweisen.

11. Ultrafiltrationsverfahren nach einem der Ansprüche 1 bis 10, **dadurch gekennzeichnet, dass** der Porendurchmesser der Membranporen eine im Wesentlichen einheitliche Größe aufweist.

12. Ultrafiltrationsverfahren nach einem der Ansprüche 1 bis 11, **dadurch gekennzeichnet, dass** aufgrund des vom Detektor erzeugten Signals eine Abschaltung erfolgt und/oder ein Störsignal abgegeben wird.

13. Ultrafiltrationsverfahren nach einem der Ansprüche 1 bis 12, **dadurch gekennzeichnet, dass** der Durchmesser der Markerpartikel im Bereich von 0,03 µm bis 0,15 µm liegt.
